# EUROPEAN PATENT APPLICATION

(11) **EP 4 765 402 A1**
(43) Date of publication of application: **24.06.2026**
(21) Application number: 25787008.9
(22) Date of filing: 24.01.2025
(51) Int. Cl.: H01M 50/262, H01M 50/291, H01M 50/24, H01M 50/249, F16B 31/00

(54) **BATTERY PACK AND VEHICLE INCLUDING SAME**

(30) Priority: 08.04.2024 KR 20240047646
(71) Applicant: LG Energy Solution, Ltd., Seoul 07335 (KR)
(72) Inventor: LEE, Sang-Joon, Daejeon 34122 (KR); RO, Yong-Hwan, Daejeon 34122 (KR); MUN, Jeong-O, Daejeon 34122 (KR); PARK, Shin-Young, Daejeon 34122 (KR); HWANG, Tae-Won, Daejeon 34122 (KR)
(74) Representative: BCKIP Part mbB
(86) International application number: PCT/KR2025/001486
(87) International publication number: WO 2025/216409

(57) **Abstract**

A battery pack according to the present disclosure may include: a pack case having a storage space configured to store a plurality of battery cells therein and an opening formed on one side; a pack lid configured to cover the opening; a partition frame coupled to the pack case so as to partition the storage space; a first fastening member having at least a portion passing through the pack lid, and coupled to the partition frame; and a second fastening member fixed to the partition frame and configured to be fastened with the first fastening member, wherein the second fastening member may have at least one reinforcement member protruding in a direction different from a penetration direction of the first fastening member and causing the second fastening member to be caught on the partition frame, and may have at least a portion configured as a material whose properties change in a predetermined high-temperature environment to weaken bonding strength between the first fastening member and the partition frame.

## Description

### TECHNICAL FIELD

The present disclosure relates to a battery pack and, more specifically, to a battery pack in which a pack lid swells in response to increased internal pressure when a thermal event occurs in the battery pack, thereby reducing the internal pressure of the battery pack, slowing down the rate of increase in internal pressure, and delaying heat transfer.

This application is based on and claims priority from Korean Patent Application No. 10-2024-0047646, filed on April 08, 2024, with the Korean Intellectual Property Office, the disclosure of which is incorporated herein in its entirety by reference.

### BACKGROUND ART

A semi-permanent battery capable of converting electrical energy into chemical energy and being repeatedly charged and discharged is called a secondary battery, which is distinguished from a primary battery that cannot be reused after one use.

In particular, lithium-ion secondary batteries have advantages such as high energy storage density, lightweight and compact structure, excellent safety, low discharge rate, and long lifespan, so they have recently been widely used as electric vehicle batteries. For reference, lithium-ion secondary batteries are generally classified into cylindrical, prismatic, and pouch-type batteries depending on their manufacturing form, and may be used in various equipment such as energy storage systems (ESSs) and other electric devices, in addition to electric vehicles.

Currently, the operating voltage of a single lithium-ion secondary battery cell is approximately 2.5 V to 4.5 V. Therefore, in order to apply a secondary battery to an energy source for an electric vehicle, a battery module may be configured by connecting multiple lithium-ion secondary battery cells in series and/or in parallel, and a battery pack may be configured by connecting the battery modules in series and/or in parallel.

Meanwhile, since secondary batteries involve chemical reactions during charging and discharging, their performance may deteriorate when used at temperatures higher than an appropriate temperature, and failure of heat control to an appropriate temperature is likely to lead to unexpected ignition or explosion. Furthermore, the battery pack, which is an assembly of secondary batteries, is configured in a structure in which these secondary batteries are stored as densely as possible inside the pack case, making it vulnerable to thermal events.

Accordingly, if a specific battery module overheats or if a thermal event such as thermal runaway occurs therein, the internal pressure of the battery pack increases due to venting gas and flame generated in the battery module where the event occurred, thereby accelerating the accumulation of thermal energy, which may cause thermal propagation to adjacent battery modules. This may lead to a problem of serial thermal runaway of battery modules and explosion of the entire battery pack.

Accordingly, it is necessary to improve the structure of the battery pack to lower the internal pressure increased inside the battery pack due to venting gas and flame resulting from a thermal event in the battery module that initially ignited and to effectively disperse the heat energy, thereby delaying the serial thermal propagation to neighboring battery modules.

### DISCLOSURE

### Technical Problem

The present disclosure is designed to solve the problems of the related art, and therefore the present disclosure is directed to providing a battery pack with reinforced structural rigidity, and a vehicle including the same.

In addition, the present disclosure is to provide a battery pack with reinforced fixing strength between the second fastening member and the partition frame, and a vehicle including the same.

In addition, the present disclosure is to provide a battery pack capable of effectively preventing thermal propagation when a thermal event occurs inside the battery pack, and a vehicle including the same.

In addition, the present disclosure is to provide a battery pack with improved assembly and productivity of the pack case, and a vehicle including the same.

In addition, the present disclosure is to provide a battery pack with improved structural stability, and a vehicle including the same.

In addition, the present disclosure is to provide a battery pack capable of effectively preventing thermal propagation by preventing the inflow of oxygen and the emission of flames, and a vehicle including the same.

The technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including: a pack case having a storage space configured to store a plurality of battery cells therein and an opening formed on one side; a pack lid configured to cover the opening; a partition frame coupled to the pack case so as to partition the storage space; a first fastening member having at least a portion passing through the pack lid, and coupled to the partition frame; and a second fastening member fixed to the partition frame and configured to be fastened with the first fastening member, wherein the second fastening member may have at least one reinforcement member protruding in a direction different from a penetration direction of the first fastening member and causing the second fastening member to be caught on the partition frame, and may have at least a portion configured as a material whose properties change in a predetermined high-temperature environment to weaken bonding strength between the first fastening member and the partition frame.

The pack lid may be configured to swell when internal pressure of the storage space increases.

The first fastening member may pass through the pack lid in a vertical direction, and the reinforcement member may be formed to protrude in a horizontal direction.

The reinforcement member may be configured as one of resin, ceramic, and cement, or a composite material of two or more of them.

The second fastening member may include an insertion portion into which an end of the first fastening member is inserted, and the reinforcement member may be connected to the insertion portion.

The reinforcement member may be formed integrally with the insertion portion.

A recessed portion may be formed in the partition frame to have a shape corresponding to the second fastening member, and the second fastening member may be fixed to the recessed portion.

The reinforcement member may be disposed to pass through the partition frame.

A plurality of reinforcement members may be provided.

The reinforcement member may be formed to extend in a columnar shape.

The reinforcement member may be formed in a plate shape.

The second fastening member may be formed by injecting an insert material into the partition frame and then hardening the insert material, and the first fastening member may be inserted into the insert material before the insert material is hardened and then fastened to the second fastening member as the insert material is hardened.

The battery pack may further include an intermediate member disposed between the pack lid and the second fastening member and having the first fastening member passing therethrough.

The intermediate member may be in close contact with the pack lid and the second fastening member.

The intermediate member may be configured as a joint nut having a female thread formed on an inner side and having at least a portion joined to the pack lid.

The battery pack may further include a sealing member disposed between the pack lid and the first fastening member so as to seal them.

In another aspect of the present disclosure, there is provided a vehicle including at least one battery pack according to the present disclosure.

### Advantageous Effects

According to the present disclosure, it is possible to provide a battery pack with further reinforced structural rigidity by the first fastening member and the second fastening member, and a vehicle including the same.

In addition, according to the present disclosure, it is possible to provide a battery pack in which the bonding strength between the first fastening member and the partition frame and the fixing strength between the second fastening member and the partition frame are reinforced by the reinforcement member, and a vehicle including the same.

In addition, according to the present disclosure, it is possible to provide a battery pack in which the bonding strength between the first fastening member and the partition frame is weakened when a thermal event occurs inside the battery pack, thereby effectively preventing thermal propagation, and a vehicle including the same.

In addition, according to the present disclosure, it is possible to provide a battery pack in which a pack lid may swell when a thermal event occurs inside the battery pack to effectively prevent thermal propagation, and a vehicle including the same.

In addition, according to the present disclosure, it is possible to provide a battery pack in which the assembly and productivity of a pack case are improved by the first fastening member and the second fastening member, and a vehicle including the same.

In addition, according to the present disclosure, it is possible to provide a battery pack with improved assembly, productivity, and structural stability by the intermediate member, and a vehicle including the same.

In addition, according to the present disclosure, it is possible to provide a battery pack capable of effectively preventing thermal propagation by preventing the inflow of oxygen and the emission of flame by the sealing member, and a vehicle including the same.

The effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view of a battery pack according to an embodiment of the present disclosure.
FIG. 2 is an exploded perspective view of the battery pack in FIG. 1.
FIG. 3 is a cross-sectional view illustrating a state in which a first fastening member and a second fastening member are coupled in a battery pack according to an embodiment of the present disclosure.
FIG. 4 is a perspective view illustrating a state in which a first fastening member and a second fastening member are separated in a battery pack according to an embodiment of the present disclosure.
FIG. 5 is a flowchart illustrating a process of fastening a first fastening member and a second fastening member in a battery pack according to an embodiment of the present disclosure.
FIG. 6 is a cross-sectional view taken along line A - A' in FIG. 1.
FIG. 7 is a cross-sectional view illustrating a state in which the pack lid swells in FIG. 6.
FIG. 8 is a perspective view illustrating a second fastening member of a battery pack according to another embodiment of the present disclosure.
FIG. 9 is a perspective view illustrating a second fastening member of a battery pack according to another embodiment of the present disclosure.
FIG. 10 is a cross-sectional view illustrating a state in which an intermediate member is further disposed on the first fastening member and the second fastening member in a battery pack according to an embodiment of the present disclosure.
FIG. 11 is a cross-sectional view illustrating a state in which a sealing member is further disposed on the first fastening member and the second fastening member in a battery pack according to an embodiment of the present disclosure.
FIG. 12 is a drawing illustrating a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

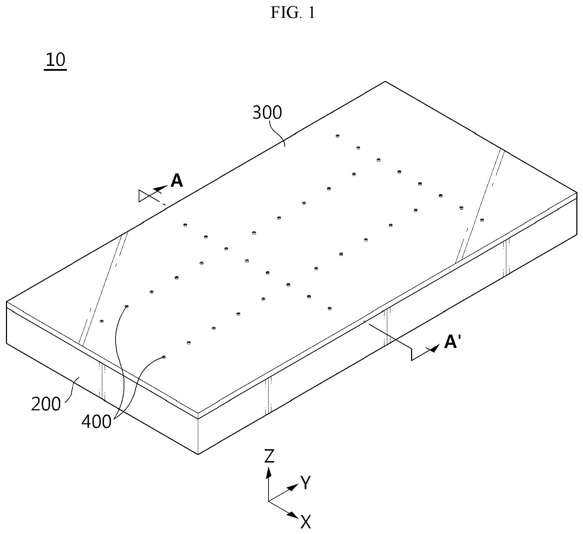

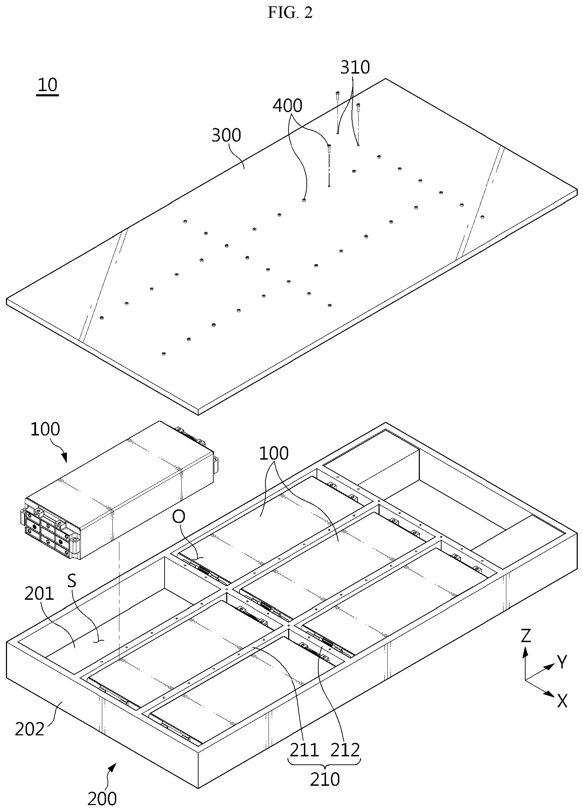

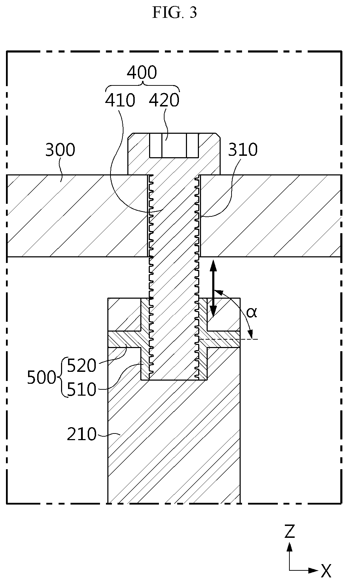

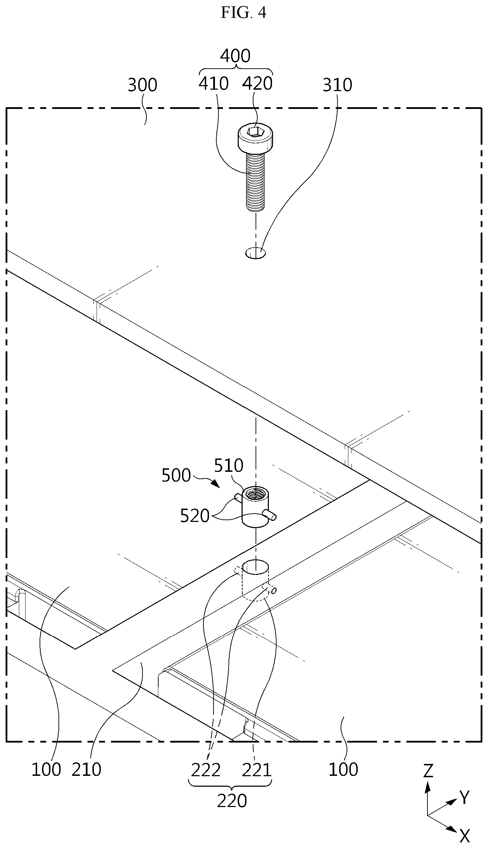

FIG. 1 is a perspective view of a battery pack according to an embodiment of the present disclosure, FIG. 2 is an exploded perspective view of the battery pack in FIG. 1, FIG. 3 is a cross-sectional view illustrating a state in which a first fastening member and a second fastening member are coupled in a battery pack according to an embodiment of the present disclosure, and FIG. 4 is a perspective view illustrating a state in which a first fastening member and a second fastening member are separated in a battery pack according to an embodiment of the present disclosure.

Hereinafter, a battery pack 10 according to an embodiment of the present disclosure will be described in detail with reference to FIGS. 1 to 4. The battery pack 10 according to an embodiment of the present disclosure includes a pack case 200, a pack lid 300, a partition frame 210, a first fastening member 400, and a second fastening member 500.

The pack case 200 has a storage space S and an opening O formed therein. A plurality of battery cells 100 are stored in the storage space S. The battery cell 100 may be understood as a secondary battery including an electrode assembly, and a pouch case that stores an electrolyte and the electrode assembly. In the present embodiment, although a pouch-type secondary battery with high energy density and easy stacking will be described in this embodiment, it is obvious that a cylindrical or prismatic secondary battery may also be applied to the battery cell 100.

The pouch-type battery cell 100 may include a pair of electrode leads that are connected to the electrode assembly and extend outside the pouch case, thereby functioning as electrode terminals. The battery cell 100 may further include electrical components such as a bus-bar, a bus-bar frame, and a module connector, which are adjacent to the pair of electrode leads.

The battery cell 100 may be stored as a battery module in the storage space S of the pack case 200. In this case, the battery module may include a module case. At least one battery cell 100 may be stored in the module case. The module case may be made of a metal material or a plastic material such as ABS resin with high rigidity and durability to physically or chemically protect the stored battery cell 100. The terminal of the battery module may be provided on the side of the module case. The terminal may be one of either a positive electrode or a negative electrode, and may be disposed on both sides or one side of the module case.

The storage space S is formed inside the pack case 200. The pack case 200 includes a bottom 201 and a side wall 202 surrounding the bottom 201, and the bottom 201 and the side wall 202 form the storage space S inside the same.

A partition frame 210 is coupled to the pack case 200. The partition frame 210 is coupled to the pack case 200 to partition the storage space S. The partition frame 210 may be disposed across the storage space S. The partition frame 210 may include a horizontal frame 211 and a vertical frame 212. The horizontal frame 211 may be formed to extend in the Y-axis direction to partition the storage space S along the X-axis direction. The vertical frame 212 may be formed to extend in the X-axis direction to partition the storage space S along the Y-axis direction. Although the embodiment of the present disclosure describes that the pack case 200 are provided with two horizontal frames 211 and one vertical frame 212, the number of horizontal frames 211 and vertical frames 212 or the number of battery cells 100 stored therein is not limited thereto and may vary. The horizontal frame 211 or vertical frame 212 may also be referred to as a cross-beam or a center beam.

In order to withstand the load of the battery cell 100 and protect the battery cell 100 from external force, the pack case 200 and the partition frame 210 may be made of a metal material such as steel or aluminum.

The opening O is formed on one side of the pack case 200. As in the illustrated example, the opening O may be formed at the top of the pack case 200. The pack lid 300 is disposed on the opening O. The pack lid 300 is disposed to cover the opening O. The pack lid 300 may cover the storage space S of the pack case 200 to isolated the storage space S from the outside. The pack lid 300 may have a shape corresponding to the shape of the opening O. For example, if the opening O has a rectangular shape, the pack lid 300 may also be configured in a rectangular shape. The pack lid 300 may be configured to be slightly larger than the opening O so as to cover the edge of the opening O. The pack lid 300 may be configured as a thin plate. For example, the pack lid 300 may be configured as a thin rectangular plate. The pack lid 300 may be made of a metal material such as aluminum, which is the same as or similar to the pack case 200 and the partition frame 210. As another example, the pack lid 300 may be made of a material that is elastically deformable or plastically deformable by an external force.

The first fastening member 400 is configured such that at least a portion thereof passes through the pack lid 300 and is coupled to the partition frame 210. A plurality of first fastening members 400 may be provided. The first fastening member 400 may pass through the pack lid 300 in a direction parallel to the Z-axis direction. The first fastening member 400 may be fastened to the second fastening member 500 so as to be coupled to the partition frame 210.

The first fastening member 400 may have at least a portion that extends toward one end, and the extending portion of the one end may pass through the pack lid 300. The first fastening member 400 may be provided as a bolt. In this case, the first fastening member 400 may include a screw portion 410 having a male thread formed thereon and a head portion 420 having a head formed thereon, and the screw portion 410 may pass through the pack lid 300. The first fastening member 400 may be made of a metal material such as steel/SUS. Such a material is resistant to high temperatures, has excellent rigidity, and provides high fastening strength.

A though-hole 310 may be formed in the pack lid 300 so that the first fastening member 400 may pass therethrough. A plurality of though-holes 310 correspond to the number of the first fastening members 400 may be formed to at positions corresponding to the positions of the first fastening members 400. The first fastening member 400 may be configured as a bolt. In the case where the first fastening member 400 is configured as a bolt, since the through-hole 310 does not have a female thread, the screw portion 410 of the first fastening member 400 may pass through the through-hole 310, and the head portion 420 may be seated on the upper surface of the pack lid 300, instead of passing through the through-hole 310.

The second fastening member 500 is configured to be fixed to the partition frame 210, and the first fastening member 400 is fastened thereto. A plurality of second fastening members 500 corresponding to the number of first fastening members 400 may be disposed at positions corresponding to the positions of the first fastening members 400. The plurality of second fastening members 500 may be disposed to be spaced apart from each other. The distance between a pair of adjacent second fastening members 500 may be formed differently from the distance between another pair of adjacent second fastening members 500. The second fastening member 500 may be disposed only in a partial area of the partition frame 210 or may be disposed in the entire area of the partition frame 210.

The second fastening member 500 includes at least one reinforcement member 520. The reinforcement member 520 is configured to protrude in a direction different from the penetration direction of the first fastening member 400 so that the second fastening member 500 is caught on the partition frame 210. The reinforcement member 520 may reinforce the fixing strength between the second fastening member 500 and the partition frame 210, so that the second fastening member 500 may be more firmly fixed to the partition frame 210.

As an example, if the penetration direction of the first fastening member 400 is formed parallel to the Z-axis direction, the reinforcement member 520 may be formed in a direction that is not parallel to the Z-axis direction. For example, the reinforcement member 520 may protrude in a direction perpendicular to the penetration direction of the first fastening member 400, and the reinforcement member 520 may protrude such that the angle α between the reinforcement member 520 and the penetration direction of the first fastening member 400 is an acute angle or an obtuse angle.

The penetration direction of the first fastening member 400 may be a vertical direction, and the reinforcement member 520 may be formed to protrude in a horizontal direction. Here, the vertical direction may be a direction parallel to the Z-axis direction, and the horizontal direction may be understood as a direction parallel to the X-Y plane. In the case where the first fastening member 400 and the reinforcement member 520 are formed above, the fixing strength between the second fastening member 500 and the partition frame 210 may be strengthened.

The reinforcement member 520 may be formed to extend in a long column shape. The reinforcement member 520 may be formed to extend in a straight line, or may be formed to extend in a curved line. In the case where the reinforcement member 520 extends in a straight line, the manufacturing of the second fastening member 500 or the processing of the partition frame 210 may be facilitated. In the case where the reinforcement member 520 extends in a curved shape, the fixing strength between the second fastening member 500 and the partition frame 210 may be further strengthened.

The reinforcement member 520 may be formed with the same cross-section in the extension direction. In this case, the manufacturing of the second fastening member 500 or the processing of the partition frame 210 may be facilitated. The reinforcement member 520 may be formed in a cylindrical shape as shown in the drawing, but the reinforcement member 520 is not limited thereto and may be formed in various shapes.

The second fastening member 500 may be equipped with two reinforcement members 520. In this case, each reinforcement member 520 may be disposed on both sides of the second fastening member 500. In the case where each reinforcement member 520 is disposed on both sides of the second fastening member 500, the fixing strength between the second fastening member 500 and the partition frame 210 may be further strengthened.

The second fastening member 500 is configured as a material capable of sufficiently securing structural rigidity in a normal state. At least a portion of the second fastening member 500 is configured as a material whose properties change in a predetermined high-temperature environment to weaken the bonding strength between the first fastening member 400 and the partition frame 210. The material may be referred to as a high-temperature vulnerable material. Here, the predetermined high-temperature environment may be, for example, a temperature environment of 100 to 250 degrees C and, preferably, a temperature environment of 150 to 200 degrees C. If a thermal event occurs inside the battery pack 10, the high-temperature environment may be made due to the discharge of venting gas and solid substances, and in this case, the internal pressure of the battery pack 10 may increase. Here, the change in the properties may be understood as, for example, a change in the properties such as melting, deterioration of brittleness, or deterioration of brittleness while melting.

If a high-temperature and high-pressure thermal event occurs inside the battery pack 10, the properties of the second fastening member 500 may change, so that the fixing strength between the pack lid 300 and the partition frame 210 may be reduced, thereby securing a space in which the pack lid 300 is able to swell. Through this, the thermal propagation may be prevented.

Conventionally, steel/SUS bolts and nuts were applied to the fastening portion between the pack case and the pack lid during the manufacture of the battery pack. However, in this battery pack, even if a thermal event occurs, the strong bolting prevents the pack lid from swelling. That is, since the conventional battery pack is fixed by the strong bolting so as to suppressing the pack lid from swelling, it is vulnerable to the thermal propagation phenomenon.

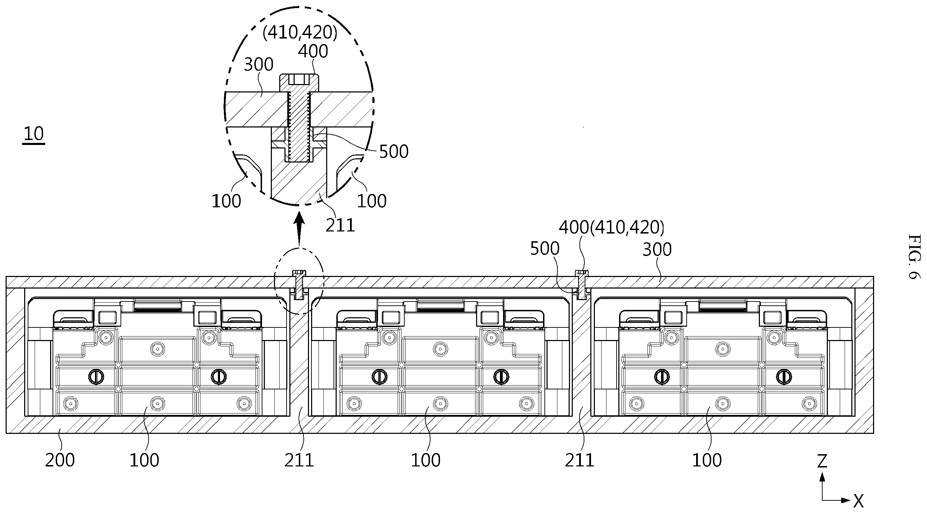

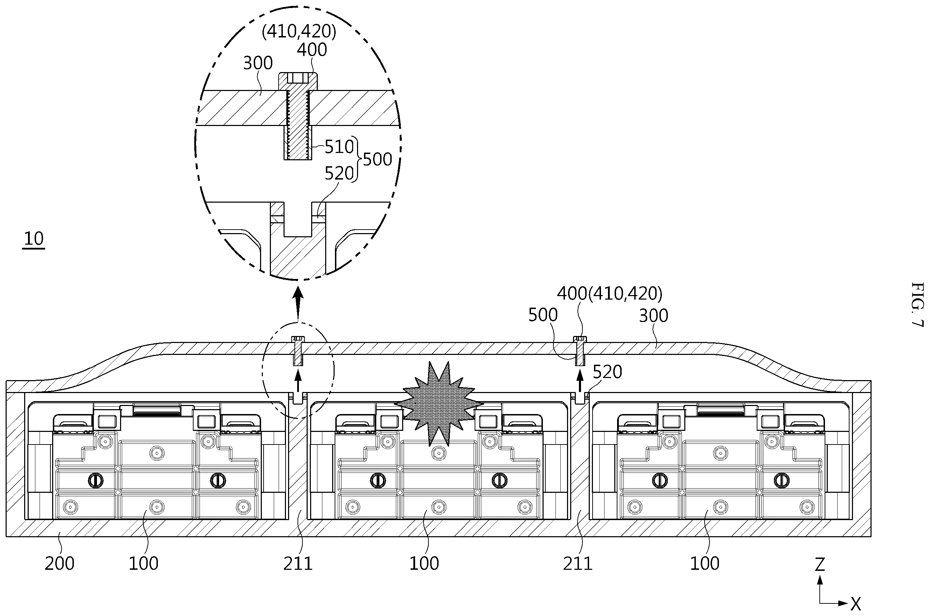

On the other hand, in the battery pack 10 according to an embodiment of the present disclosure, the second fastening member 500 is improved to secure the structural stability to a degree that satisfies the vibration and impact test conditions in a normal state and to weaken the bonding between the first fastening member 400 and the partition frame 210 when a thermal event such as ignition of the battery cell 100 occurs, allowing the pack lid 300 to swell, thereby preventing the thermal propagation. This effect will be described in more detail below with reference to FIGS. 6 and 7.

At least a portion of the second fastening member 500 may be configured as one of resin, ceramic, and cement, or a composite material of two or more of them. That is, the high-temperature vulnerable material may be configured as one of resin, ceramic, and cement, or a composite material of two or more of them. The high-temperature vulnerable material may be a moldable material. The melting point of the high-temperature vulnerable material may be lower than the melting point of the material constituting the partition frame 210.

The resin may be natural resin, synthetic resin, high-strength resin, and may be thermoplastic resin capable of melting in a high-temperature environment. The resin may be, for example, polycarbonate, polyurethane, or polyester resin, but these are only examples and the resin is not limited thereto. Here, the resin may exhibit a property of melting or softening in a high-temperature environment such as 100 to 250 degrees C, or may contain additives that adjust the melting point or glass transition temperature to the temperature within the high-temperature environment range. Preferred resin includes engineering plastics such as MC (Mono Casting) nylon or polyacetal, or ether-based and ester-based polyurethanes.

MC nylon has a structure in which imide bonds and ether bonds are mixed, and the imide bonds provide moderate heat resistance and strength, while the ether bonds exhibit excellent processability. MC nylon has strength similar to metal, is easier to process than general plastics, and is more wear-resistant. MC nylon can withstand high temperatures up to 200 degrees C and melts at temperatures higher than that, thereby weakening the bonding strength between the first fastening member 400 and the partition frame 210 through the second fastening member 500.

Polyacetal is a high-strength thermoplastic plastic with hardness close to metal. Although polyacetal can withstand temperatures of about 80 to 120 degrees C, it has heat resistance capable of withstanding continuous use temperatures of about 150 degrees for a short period of time, so it may be applied without difficulty to a temperature environment where a battery pack 10 is used in a normal state.

The ceramic may be, for example, bonded ceramic, zirconia ceramic, or silica ceramic, but these are only examples and the disclosure is not limited thereto. The cement may be, for example, alumina cement, refractory cement, or composite cement, but these are only examples and the disclosure is not limited thereto. Here, the ceramic or cement may be processed to be less brittle in a high-temperature environment of 100 to 250 degrees C.

The high-temperature vulnerable material may be configured as a composite material of two or more of resin, ceramic, and cement, and may be configured as a bonding agent that is a composite of ceramic and resin, such as ceramic-resin cement.

Here, the bonding strength between the first fastening member 400 and the partition frame 210 may be weakened in the following two cases. The first case is that the bonding strength between the portion of the second fastening member 500, excluding the reinforcement member 520, and the reinforcement member 520 is weakened. In this case, the portion of the second fastening member 500, excluding the reinforcement member 520, and the reinforcement member 520 enter the state where they are easily separated from each other (hereinafter referred to as a first state). The second case is that the fastening strength between the portion of the second fastening member 500, excluding the reinforcement member 520, and the first fastening member 400 is weakened. In this case, the portion of the second fastening member 500, excluding the reinforcement member 520, and the first fastening member 400 enter the state in which they are easily separated from each other (hereinafter referred to as a second state). In the above two cases (the first state and the second state), the portion of the second fastening member 500, excluding the reinforcement member 520, may be understood as an insertion portion 510, which will be described below.

The second fastening member 500 may be provided with an insertion portion 510. The insertion portion 510 is configured such that an end of the first fastening member 400 is inserted thereinto. The first fastening member 400 may be disposed in close contact with the insertion portion 510. In the case where the first fastening member 400 is configured as a bolt, at least a portion of the screw portion may be inserted, so that the space between the threads of the screw portion may be filled with the insertion portion 510 in close contact therewith. The insertion portion 510 may be formed in a cylindrical groove shape as shown in the drawing, but the insertion portion 510 is not limited thereto, and may be formed in various groove shapes.

The reinforcement member 520 may be connected to the insertion portion 510. The reinforcement member 520 may be connected to the side of the insertion portion 510. However, it is not limited thereto, and the reinforcement member 520 may be connected to the lower or upper part of the insertion portion 510, and in the case where a plurality of reinforcement members 520 are provided, the reinforcement members 520 may be connected to the insertion portion 510 at different positions.

The reinforcement member 520 may be formed integrally with the insertion portion 510. In this case, the insertion portion 510 may be configured as the same material as the reinforcement member 520.

The partition frame 210 may have a recessed portion 220 formed therein. The recessed portion 220 may be formed to be recessed to correspond to the shape of the second fastening member 500. The second fastening member 500 may be fixed to the recessed portion 220. The recessed portion 220 may have a first recessed portion 221 and a second recessed portion 222. The first recessed portion 221 may be formed in a shape corresponding to the insertion portion 510 of the second fastening member 500. The second recessed portion 222 may be formed in a shape corresponding to the reinforcement member 520 of the second fastening member 500. The first recessed portion 221 may not have threads formed, and in this case, separate tap processing is unnecessary for the first recessed portion 221, thereby reducing the time and cost required for processing the first recessed portion 221.

The reinforcement member 520 may be positioned to pass through the partition frame 210. The reinforcement member 520 may have an end exposed to the storage space S and passing through the partition frame 210. In this case, the heat generated in the storage space S may be directly exposed to the reinforcement member 520, so that the heat of the storage space S may be more reliably transferred to the reinforcement member 520. In addition, the reinforcement member 520 may be more easily disposed in a portion corresponding to the reinforcement member 520 of the recessed portion 220. For example, the reinforcement member 520 may be inserted into the portion of the recessed portion 220 not only from the inside of the recessed portion 220 but also from the outside, thereby facilitating mounting of the reinforcement member 520.

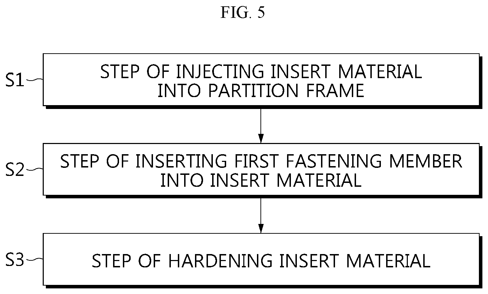

FIG. 5 is a flowchart illustrating a process of fastening a first fastening member and a second fastening member in a battery pack according to an embodiment of the present disclosure.

Hereinafter, a process of fastening the first fastening member 400 and the second fastening member 500 in a battery pack 10 according to an embodiment of the present disclosure will be described in detail with reference to FIG. 5. In a battery pack 10 according to an embodiment of the present disclosure, a process of fastening the first fastening member 400 and the second fastening member 500 includes step S1, step S2, and step S3 that are sequentially performed. In the above process, the insertion portion 510 and the reinforcement member 520 of the second fastening member 500 may be integrally formed with the same material. In the above process, the manufacturing of the second fastening member 500 may be completed.

In step S1, an insert material is injected into the partition frame 210. The insert material is intended to form the second fastening member 500 and may include the high-temperature vulnerable material described above. The insert material may be provided in a liquid, gel, or soft solid state enabling formation, and may be provided as a material capable of being hardened under certain conditions. The insert material may be injected, in particular, into the recessed portion 220 of the partition frame 210. The insert material may be injected through the first recessed portion 221 or the second recessed portion 222 of the recessed portion 220.

In step S2, the first fastening member 400 is inserted into the insert material. Specifically, after step S1, the first fastening member 400 is inserted into the insert material that has been injected into the partition frame 210. The first fastening member 400 may be inserted into the insert material injected into the recessed portion 220. The first fastening member 400 may push out the insert material while being inserted into the insert material. In this process, the first fastening member 400 may come into close contact with the insert material, and the first recessed portion 221 and the second recessed portion 222 may be evenly filled with the insert material.

In step S3, the insert material is hardened. Specifically, after step S2, the insert material in which the first fastening member 400 is inserted is hardened. Various hardening methods such as thermal hardening, UV hardening, and natural hardening may be applied to the hardening of the insert material, and there is no limitation as to the hardening method. The hardened insert material through the above process may form the second fastening member 500, and the first fastening member 400 may be completely fastened to the second fastening member 500. As described above, the formation of the second fastening member 500 and the fastening between the first fastening member 400 and the second fastening member 500 may be performed at once by a simple process using the insert material, so that the assembly and productivity of the battery pack 10 may be improved.

FIG. 6 is a cross-sectional view taken along line A - A' in FIG. 1, and FIG. 7 is a cross-sectional view illustrating a state in which the pack lid swells in FIG. 6.

Hereinafter, swelling of the pack lid 300 of the battery pack 10 according to an embodiment of the present disclosure will be described in detail with reference to FIGS. 6 and 7. FIG. 6 illustrates the battery pack 10 before the pack lid 300, and FIG. 7 illustrates the battery pack 10 with a swollen pack lid 300.

The battery pack 10 in a normal state may have a cross-section as shown in FIG. 6. The battery pack 10 according to an embodiment of the present disclosure may be configured such that the pack lid 300 swells to a state shown in FIG. 7 when the internal pressure of the storage space S increases.

If a thermal event occurs inside the battery pack 10, the discharge of venting gas and solid substances may result in generation of high-temperature heat and an increase in the internal pressure. The high-temperature heat may be transferred to the first fastening member 400 and the second fastening member 500 that are fastened to each other (see FIG. 6), and thus a predetermined high-temperature environment may be created in the second fastening member 500. In this high-temperature environment, the bonding strength between the first fastening member 400 and the partition frame 210 deteriorates. At the same time, when the increased internal pressure of the pack case 200 acts on the pack lid 300, the first fastening member 400 may be released and separated from the partition frame 210. Then, the pack lid 300 and the partition frame 210 may be slightly separated to generate a space therebetween, so that the increased internal pressure may be alleviated. If the increased internal pressure inside the battery pack 10 is not alleviated and continues to be maintained, an event such as ignition occurring in some battery cells 100 is likely to be transferred to other battery cells 100. However, according to the present disclosure, a reduction in the bonding strength between the first fastening member 400 and the partition frame 210 may separate the pack lid 300 to alleviate the increase in internal pressure, thereby preventing thermal propagation.

In addition, in the case where the pack lid 300 is configured as a material capable of elastic deformation or plastic deformation by an external force, the pack lid 300 may further swell toward the direction in which the internal pressure is applied (see FIG. 7). As the pack lid 300 swells, the volume of the space between the pack case 200 and the pack lid 300 increases, so that the increased internal pressure may be alleviated, and at the same time, the flow of the venting gas or the solid discharges may be formed more smoothly. Accordingly, the thermal propagation may be effectively delayed or prevented.

Although FIG. 7 illustrates the first state in which the insertion portion 510 and the reinforcement member 520 are separated from each other in the state in which the insertion portion 510 is still fastened to the first fastening member 400, unlike what is illustrated in FIG. 7, the second state in which the first fastening member 400 is separated from the insertion portion 510 is also possible.

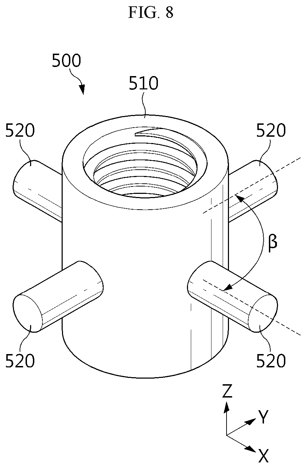

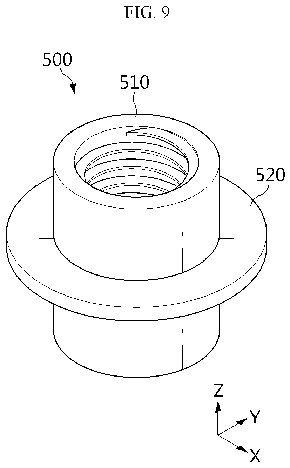

FIG. 8 is a perspective view illustrating a second fastening member of a battery pack according to another embodiment of the present disclosure, and FIG. 9 is a perspective view illustrating a second fastening member of a battery pack according to another embodiment of the present disclosure.

Hereinafter, second fastening members 500 of battery packs 10 according to other embodiments of the present disclosure will be described in detail with reference to FIGS. 8 and 9.

Referring to FIG. 8, a second fastening member 500 of a battery pack 10 according to another embodiment of the present disclosure may include three or more reinforcement members 520. In this case, each of the reinforcement members 520 may be connected to the insertion portion 510 of the second fastening member 500. As described above, in the case where the second fastening member 500 is provided with three or more reinforcement members 520, the second fastening member 500 may be more strongly caught on the partition frame 210. Therefore, the fixing strength between the second fastening member 500 and the partition frame 210 may be further increased.

The plurality of reinforcement members 520 may be arranged symmetrically with each other. The plurality of reinforcement members 520 may be disposed to form the same angle β between each other. For example, although not shown in the drawing, in the case where three reinforcement members 520 are provided, the reinforcement members 520 may be disposed to form 120 degrees with each other. In addition, in the case where four reinforcement members 520 are provided as shown in FIG. 8, the reinforcement members 520 may be disposed to form 90 degrees with each other. As described above, when the plurality of reinforcement members 520 are disposed symmetrically with each other, the second fastening member 500 may be more stably fixed to the partition frame 210.

Unlike the above, only one reinforcement member 520 may be provided. In this case, the reinforcement member 520 may be provided on one side of the second fastening member 500.

Referring to FIG. 9, in a battery pack 10 according to another embodiment of the present disclosure, the second fastening member 500 may have a reinforcement member 520 configured in a plate shape. In this case, the reinforcement member 520 may be formed in a plate shape surrounding the second fastening member 500, and the reinforcement member 520 may also be formed in a shape surrounding the insertion portion 510 of the second fastening member 500. For example, if the cross-section of the insertion portion 510 is circular, the reinforcement member 520 may be formed in the shape of a disk or donut surrounding the outer circumference of the insertion portion 510. As described above, if the reinforcement member 520 is formed in a plate shape surrounding the second fastening member 500, the contact area between the reinforcement member 520 and the partition frame 210 may increase, so that the fixing strength of the second fastening member 500 may be further enhanced. Meanwhile, although not shown in the drawing, a plurality of reinforcement members 520 having such a shape may be disposed to be spaced apart from each other along the direction toward the pack lid 300 in the insertion portion 510.

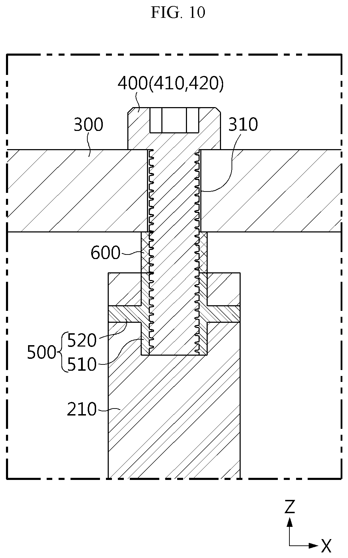

FIG. 10 is a cross-sectional view illustrating a state in which an intermediate member is further disposed on the first fastening member and the second fastening member in a battery pack according to an embodiment of the present disclosure.

Hereinafter, an intermediate member 600 will be described in detail with reference to FIG. 10. The intermediate member 600 is configured to be disposed between the pack lid 300 and the second fastening member 500, and the first fastening member 400 passes through the intermediate member 600. The intermediate member 600 may be made of a metal material such as steel/SUS. Such materials are resistant to high temperatures and have excellent rigidity.

The intermediate member 600 may support the first fastening member 400. The first fastening member 400 may be fixed to the intermediate member 600 while being supported thereon before being fastened to the second fastening member 500.

The intermediate member 600 may support the pack lid 300 and the second fastening member 500. For example, the intermediate member 600 may support the pack lid 300 upward and support the second fastening member 500 downward. As described above, since the intermediate member 600 supports the pack lid 300 and the second fastening member 500, even if shock or vibration is applied to the battery pack 10, it may be effectively buffered, thereby further enhancing structural stability.

The intermediate member 600 may be in close contact with the pack lid 300 and the second fastening member 500. That is, the intermediate member 600 may be in close contact with both the pack lid 300 and the second fastening member 500. The pack lid 300 and the second fastening member 500 may be separated from each other while maintaining a distance by the intermediate member 600. The intermediate member 600 may seal between the pack lid 300 and the second fastening member 500.

The intermediate member 600 may be configured as a joint nut having a female thread formed on the inner surface and at least a portion joined to the pack lid 300. In the case where the first fastening member 400 is a bolt, the male thread of the first fastening member 400 may engage with the female thread of the joint nut. The joint nut may be joined and fixed to the pack lid 300, and the top of the joint nut may be joined to the lower surface of the pack lid 300. In the case where the intermediate member 600 is configured as a joint nut joined to the pack lid 300, the fastening strength between the first fastening member 400 and the second fastening member 500 may be further strengthened. The first fastening member 400 may be fastened to the joint nut fixed to the pack lid 300, so that the first fastening member 400 may be pre-fixed to the pack lid 300. The first fastening member 400 may be subsequently fastened to the second fastening member 500 in the state of being pre-fixed to the pack lid 300.

That is, a plurality of first fastening members 400 may be pre-fixed to the pack lid 300 through a plurality of intermediate members 600 that are fixed to the lower surface of the pack lid 300, and then the pack lid 300 may be disposed to cover the opening O of the pack case 200, so that the plurality of first fastening members 400 may be fastened to the plurality of second fastening members 500 at once. Accordingly, there is no need to align and fasten the respective first fastening members 400, thereby improving the assembly performance of the battery pack 10 and the assembly accuracy thereof.

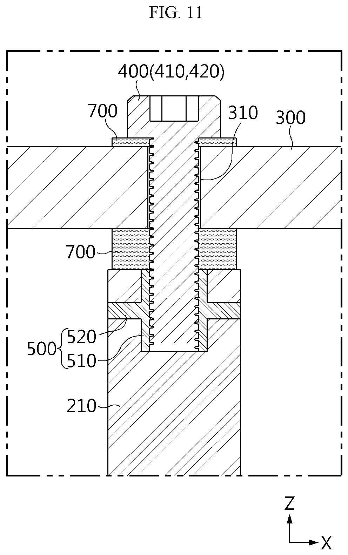

FIG. 11 is a cross-sectional view illustrating a state in which a sealing member is further disposed on the first fastening member and the second fastening member in a battery pack according to an embodiment of the present disclosure.

Hereinafter, a sealing member 700 will be described in detail with reference to FIG. 11. The sealing member 700 is configured to seal the pack lid 300 and the first fastening member 400 between them. The sealing member 700, unlike the previously described high-temperature vulnerable material, may be formed of a material capable of maintaining its properties even at high temperatures.

The sealing member 700 may be disposed on the outer side of the pack lid 300, which is far from the partition frame 210. In the case where the first fastening member 400 is configured as a bolt, the sealing member 700 may be disposed between the head portion 420 of the bolt and the outer surface of the pack lid 300.

The sealing member 700 may also be disposed on the inner surface of the pack lid 300. In this case, the sealing member 700 may be disposed between the inner surface of the pack lid 300 and the partition frame 210.

Although not shown in FIG. 11, the sealing member 700 may also be disposed on the inner surface of the through-hole 310 of the pack lid 300.

The conventional battery pack is vulnerable to thermal propagation due to the inflow of oxygen or the emission of flame through the bolting hole for bolting fastening. In the battery pack 10 according to an embodiment of the present disclosure, the sealing member 700 may prevent the inflow of oxygen or the emission of flame by implementing a seal between the first fastening member 400 and the pack lid 300, thereby effectively preventing thermal propagation.

Meanwhile, a combination of FIG. 10 and FIG. 11 is also possible. That is, a battery pack 10 may also be implemented to include both the intermediate member 600 and the sealing member 700. In this case, a portion of the sealing member 700 may be configured to seal between the pack lid 300 and the intermediate member 600 and/or between the intermediate member 600 and the second fastening member 500.

Meanwhile, the battery pack 10 according to the present disclosure, although not shown, may further include various devices for controlling the charging and discharging of battery cells 100, such as a BMS (Battery Management System), a current sensor, and a fuse.

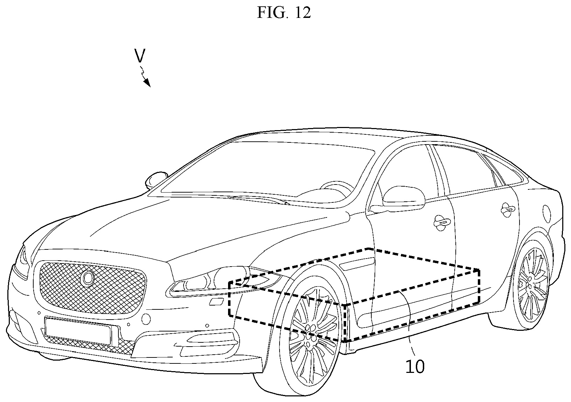

FIG. 12 is a drawing illustrating a vehicle according to an embodiment of the present disclosure.

Referring to FIG. 12 below, the battery pack 10 according to the present disclosure may be applied to a vehicle V such as an electric vehicle or a hybrid vehicle. That is, the vehicle V according to the present disclosure may include the battery pack 10 according to the present disclosure. The battery pack 10 may be installed in the body frame or trunk space under the vehicle seat, and may be installed in the reversed arrangement of the battery pack 10 when installed in the vehicle, as needed.

Meanwhile, although terms indicating directions such as up, down, left, right, front, and back are used in this specification, it is obvious to those skilled in the art to which the present disclosure pertains that these terms are only for convenience of explanation with reference the relevant drawings and may vary depending on the position of the target object or the position of the observer.

As described above, although the present disclosure has been described with reference to limited embodiments and drawings, the present disclosure is not limited thereto, and various modifications and variations are possible inside the technical idea of the present disclosure and the scope of equivalence of the claims to be described below by those skilled in the art to which the present disclosure pertains.

### [Description of Reference numerals]

10: Battery pack
100: Battery cell
200: Pack case
201: Bottom
202: Side wall
210: Partition frame
211: Horizontal frame
212: Vertical frame
220: Recessed portion
221: First recessed portion
222: Second recessed portion
300: Pack lid
310: Through-hole
400: First fastening member
410: Screw portion
420: Head portion
500: Second fastening member
510: Insertion portion
520: Reinforcement member
600: Intermediate member
700: Sealing member
O: Opening
S: Storage space
V: Vehicle

## Claims

1. A battery pack comprising:
a pack case having a storage space configured to store a plurality of battery cells therein and an opening formed on one side;
a pack lid configured to cover the opening;
a partition frame coupled to the pack case so as to partition the storage space;
a first fastening member having at least a portion passing through the pack lid, and coupled to the partition frame; and
a second fastening member fixed to the partition frame and configured to be fastened with the first fastening member,
wherein the second fastening member
has at least one reinforcement member protruding in a direction different from a penetration direction of the first fastening member and causing the second fastening member to be caught on the partition frame, and
has at least a portion configured as a material whose properties change in a predetermined high-temperature environment to weaken bonding strength between the first fastening member and the partition frame.

2. The battery pack according to claim 1,
wherein the pack lid
is configured to swell when internal pressure of the storage space increases.

3. The battery pack according to claim 1,
wherein the first fastening member passes through the pack lid in a vertical direction, and
wherein the reinforcement member is formed to protrude in a horizontal direction.

4. The battery pack according to claim 1,
wherein the reinforcement member
is configured as one of resin, ceramic, and cement, or a composite material of two or more of them.

5. The battery pack according to claim 1,
wherein the second fastening member
comprises an insertion portion into which an end of the first fastening member is inserted, and
wherein the reinforcement member
is connected to the insertion portion.

6. The battery pack according to claim 5,
wherein the reinforcement member
is formed integrally with the insertion portion.

7. The battery pack according to claim 1,
wherein a recessed portion is formed in the partition frame to have a shape corresponding to the second fastening member, and
wherein the second fastening member is fixed to the recessed portion.

8. The battery pack according to claim 1,
wherein the reinforcement member
is disposed to pass through the partition frame.

9. The battery pack according to claim 1,
wherein a plurality of reinforcement members are provided.

10. The battery pack according to claim 1,
wherein the reinforcement member
is formed to extend in a columnar shape.

11. The battery pack according to claim 1,
wherein the reinforcement member
is formed in a plate shape.

12. The battery pack according to claim 1,
wherein the second fastening member
is formed by injecting an insert material into the partition frame and then hardening the insert material, and
wherein the first fastening member
is inserted into the insert material before the insert material is hardened and then fastened to the second fastening member as the insert material is hardened.

13. The battery pack according to claim 1,
further comprising an intermediate member disposed between the pack lid and the second fastening member, and having the first fastening member passing therethrough.

14. The battery pack according to claim 13,
wherein the intermediate member
is in close contact with the pack lid and the second fastening member.

15. The battery pack according to claim 13,
wherein the intermediate member
is configured as a joint nut having a female thread formed on an inner side and having at least a portion joined to the pack lid.

16. The battery pack according to claim 1,
further comprising a sealing member disposed between the pack lid and the first fastening member so as to seal them.

17. A vehicle comprising at least one battery pack according to any one of claims 1 to 16.
